Europäisches Patentamt

European Patent Office

Office européen des brevets

(11) Numéro de publication: **0 267 104 B1**

(12) # FASCICULE DE BREVET EUROPEEN

(45) Date de publication de fascicule du brevet:
**15.01.92**

(51) Int. Cl.5: **H04N 5/217**

(21) Numéro de dépôt: **87402419.3**

(22) Date de dépôt: **27.10.87**

(54) **Circuit mélangeur vidéo, utilisable pour l'imagerie haute résolution avec des caméras à capteurs matriciels solides.**

(30) Priorité: **31.10.86 FR 8615237**

(43) Date de publication de la demande:
**11.05.88 Bulletin  88/19**

(45) Mention de la délivrance du brevet:
**15.01.92 Bulletin  92/03**

(84) Etats contractants désignés:
**DE GB**

(56) Documents cités:
**EP-A- 0 178 938**
**US-A- 4 334 238**

**PATENT ABSTRACTS OF JAPAN, vol. 6, no. 111 (E-114)[989], 22 juin 1982; & JP-A-57 39 673 (MINOLTA CAMERA K.K.) 04-03-1982**

(73) Titulaire: **THOMSON-CSF**
**51, Esplanade du Général de Gaulle**
**F-92800 Puteaux(FR)**

(72) Inventeur: **Gillet, Claude**
**THOMSON-CSF SCPI 19, avenue de Messine**
**F-75008 Paris(FR)**
Inventeur: **Voisin, Gérard**
**THOMSON-CSF SCPI 19, avenue de Messine**
**F-75008 Paris(FR)**
Inventeur: **Bruyeres-Inza, Jean-François**
**THOMSON-CSF SCPI 19, avenue de Messine**
**F-75008 Paris(FR)**

(74) Mandataire: **Turlèque, Clotilde et al**
**THOMSON-CSF SCPI**
**F-92045 PARIS LA DEFENSE CEDEX 67(FR)**

## Description

La présente invention concerne un circuit mélangeur vidéo dont l'application est plus particulièrement envisagée pour l'obtention d'images haute résolution avec des caméras de télévision comportant des capteurs matriciels en circuits solides dits DTC (Dispositif à Transfert de Charges).

Les capteurs DTC incorporent sur la même surface de silicium une matrice de points sensibles et le dispositif de lecture en série de tous ces points sensibles qui permet de constituer un signal vidéo. On rencontre principalement deux types d'architecture : les dispositifs à transfert de trame et les dispositifs à transfert interligne.

Les capteurs solides présentent, par nature et par construction, bon nombre d'avantages par rapport aux tubes au silicium, ces avantages résultant essentiellement de leur faible encombrement et des tensions peu élevées de mise en oeuvre. A noter également leur résistance élevée aux chocs et aux vibrations, la possibilité de refroidissement simplifié, la durée de vie plus élevée, la maintenance facilitée etc...

Il est connu, notamment par le brevet US-A-4 334 238, d'augmenter la résolution des caméras DTC en les équipant de deux capteurs du type transfert interligne qui présentent un grand nombre de cellules par ligne (jusqu'à 500 points par ligne), ces cellules n'étant pas jointives. En effet, la zone sensible et la zone mémoire sont imbriquées l'une dans l'autre et non placées l'une au dessus de l'autre comme dans l'organisation dite à transfert de trame.

La zone mémoire de ces matrices est organisée en une série de registres verticaux intercalés entre les colonnes de cellules sensibles. Ces registres verticaux constituent des zones aveugles de largeur comparable à celle des colonnes de points sensibles. Il est donc possible d'associer optiquement deux capteurs de ce type en les décalant d'un demi-pas le long de la ligne dans le sens horizontal et en les super posant dans le sens vertical pour doubler la résolution horizontale.

Le montage optique est effectué sur une prisme séparateur placé entre l'objectif et les capteurs DTC. Le prisme comporte une surface plane semi-transparente qui partage le faisceau en deux en sorte que les capteurs voient la même image. Les deux capteurs DTC sont positionnés avec précision l'un par rapport à l'autre et décalés d'un demi-pas comme il a été dit.

Pour la lecture des capteurs, on peut utiliser deux signaux d'horloge à la fréquence point, l'un de ces signaux étant décalé d'une demi-période par rapport à l'autre pour correspondre au décalage spatial entre les matrices selon les lignes horizontales. Après traitement par alignement au noir et contrôle de gain automatique les signaux vidéo des deux capteurs peuvent être mutiplexés à la cadence point pour sélectionner les points alternés de chaque capteur.

Cette technique simple présente divers inconvénients qui résultent essentiellement de la non-homogénéité des deux capteurs. En effet, lors de la fabrication le dopage du silicium n'est pas homogène, aussi bien à l'intérieur du barreau que sur chaque galette découpée dans le barreau où il montre une variation qui va du centre au bord et qui varie d'une galette à une autre. En conséquence, les diodes formées sur la matrice présentent des sensibilités de détection différentes et des petites variations entre elles. Les deux capteurs présentent donc des niveaux de détection différents pour les mêmes conditions d'éclairement. En outre, l'évolution avec la température se traduit par un courant de fuite de décharge du noir qui va être différent. L'aspect architecture présente peu d'influence du point de vue des variations sauf si l'on a affaire à des composants provenant de fabricants différents.

Il est donc nécessaire de compenser les différences entre les capteurs mais les écarts de sensibilité ne peuvent être compensés aisément selon des techniques électroniques. Pour obtenir une image de bonne qualité il faudrait asservir le niveau de signal vidéo délivré par les deux capteurs avec une précision de l'ordre du pour cent, avoir des niveaux de noir identiques lorsque la température varie, et sélectionner des capteurs qui ont des sensibilités sensiblement identiques et homogènes sur leur surface.

Toutes ces contraintes n'ont pas de solution immédiate au niveau de l'utilisation et ne sont pas résolues au niveau du fabricant.

Un but de l'invention est de proposer un mélangeur vidéo qui permet de remédier à ces inconvénients en utilisant des capteurs standards.

On sait, suivant notamment des techniques de correction de contour ou dans le domaine des images télévision à haute définition, que l'on peut séparer l'information vidéo en deux parties, une première partie correspondant à un spectre basse fréquence qui se situe entre zéro et environ 500 Khz (cette dernière valeur est donnée à titre indicatif et l'on peut choisir une limite assez éloignée de cette valeur) et un spectre haute fréquence qui se situe au-dessus de la limite basse fréquence choisie. L'information basse fréquence constitue la partie sensible au défaut de non-homogénéité. Elle se traduit sur l'image par des grandes zones de teintes sombres ou claires. Elle ne concerne pas les détails, la finesse, et donc exclut les variations brutales, notamment les contours. Avec ce spectre le point le plus petit est représenté pu une zone qui correspond environ à trois à quatre pour cent de la largeur de l'écran. L'information haute fréquence, au contraire, correspond au bon piqué de l'image aux fronts raides et donc aux contours et aux transitions brutales. Cette valeur haute fréquence est limitée aux alentours de 7 à 8 MHz pour les capteurs actuels.

Selon un mode de réalisation de l'invention, il est proposé de réaliser un circuit mélangeur vidéo recevant un premier signal vidéo et un deuxième signal vidéo résultant de l'analyse de la même image par des capteurs dont les points d'analyse sont décalés d'un demi-intervalle entre deux points consécutifs d'un même capteur, le mélangeur comportant un commutateur-échantillonneur pour former un signal composite à partir de ces signaux vidéo, caractérisé en ce qu'il comporte un circuit sommateur dont les entrées sont couplées aux sorties de deux voies :

- une première voie comportant, connectés en série, un circuit soustracteur qui reçoit le premier et le deuxième signal vidéo, un circuit filtre haute fréquence pour éliminer le spectre basse fréquence,compris entre 0 et une fréquence prédéterminée,du signal de sortie du circuit soustracteur et transmettre la partie HF du spectre de ce signal, au dessus de cette fréquence prédéterminée, et le commutateur-échantillonneur commandé séquentiellement pour connecter la première entrée du sommateur à la sortie du circuit filtre durant une moitié de chaque période point et à un point de potentiel de référence de masse durant l'autre moitié de la période point,
- une deuxième voie transmettant l'un des signaux vidéo à la deuxième entrée dudit sommateur,

en sorte que le signal mélangé délivré en sortie du sommateur est constitué spectralement de la partie HF correspondant à l'un desdits signaux vidéo au cours de chaque première demi-période point de balayage et de la partie HF de l'autre signal vidéo au cours de chaque deuxième demi-période et d'une partie BF inchangée pendant ces deux demi-périodes point.

D'autres modes de réalisation de l'invention sont définis aux revendications 2 et 4 . Les particularités et avantages de l'invention apparaîtront dans la description qui suit donnée à titre d'exemple à l'aide des figures annexées qui représentent :

- Fig.1, un schéma d'un premier mode de réalisation d'un circuit mélangeur vidéo conforme à l'invention considéré dans le cadre d'une application à l'imagerie haute résolution avec une caméra à capteurs DTC ;
- Fig.2, des formes d'ondes relatives aux signaux de synchronisation 30 pour la lecture des capteurs;

- Fig.3, un tableau représentant les signaux vidéo basse fréquence et haute fréquence prélevés au cours de chaque demi-période;
- Fig.4, un schéma d'un deuxième mode de réalisation d'un circuit mélangeur selon l'invention;
- Fig.5, un tableau correspondant aux signaux vidéo basse fréquence et haute fréquence prélevée dans la solution Fig.4 au cours de chaque demi-période;
- Fig.6, un schéma d'une troisième variante de réalisation d'un circuit mélangeur conforme à l'invention ;
- Fig.7 et 8, deux réalisations possibles du filtrage HF utilisé, respectivement avec un filtre passe-haut ou passe-bande.

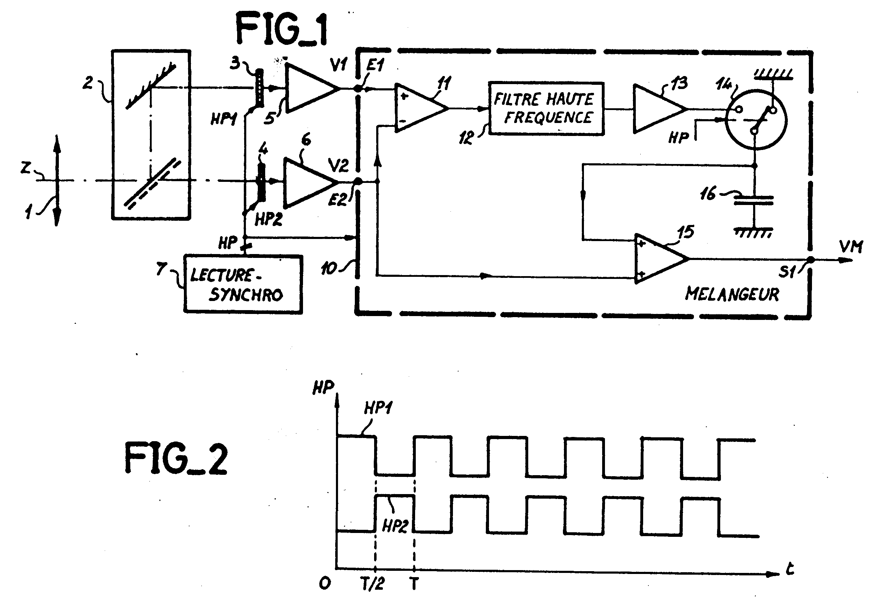

Le circuit mélangeur 10 est utilisé dans le concept Fig.1 pour traiter les signaux vidéo V1 et V2 élaborés par une caméra de télévision à deux capteurs DTC agencés pour produire une image à haute résolution. Les éléments principaux indiqués comportent l'objectif 1 d'axe optique Z, suivi d'un séparateur optique 2 qui divise le flux lumineux en deux voies optiques destinées respectivement aux deux capteurs matriciels solides 3 et 4. Ces capteurs sont de préférence du type à interligne et positionnés l'un par rapport à l'autre comme il a été indiqué précédemment. Les signaux détectés sont appliqués à des circuits d'amplification et de traitement 5 et 6. Le circuit 7 est le circuit de commande de lecture et de synchronisation à la cadence point. On désigne par HP les signaux d'horloge point. Ces signaux sont détaillés sur la figure 2 en appelant HP1 le signal d'horloge appliqué à l'un des capteurs 3 et HP2 le signal décalé d'une demi-période appliqué à l'autre capteur 4. L'un quelconque de ces signaux est utilisable pour commander le mélangeur 10.

Le mélangeur 10 comporte deux voies. Une première voie groupe, connectés en série, un circuit amplificateur différentiel ou soustracteur 11, un filtre haute fréquence 12, un amplificateur d'équilibrage 13 et un échantillonneur-bloqueur 14. La sortie de l'échantillonneur constitue la sortie de cette première voie et est appliquée à une première entrée d'un circuit sommateur 15, lequel reçoit par sa deuxième entrée la deuxième voie constituée par l'un des signaux vidéo, V2 dans le montage représenté. La sortie du sommateur VM représente la vidéo mélangée.

Le circuit soustracteur 11 est connecté aux deux entrées E1 et E2 du mélangeur 10 d'où lui parviennent respectivement les signaux V1 et V2. Il délivre la différence V1-V2 de ces signaux. Le circuit filtre haute fréquence 12 a pour action d'éliminer les composantes basse fréquence de la différence V1-V2 dans une bande spectrale qui se situe entre zéro et une fréquence prédéterminée, par exemple de l'ordre de 500KHz. Le signal sortant du filtre 12 comporte donc les composantes hautes fréquences au-dessus de cette valeur limite et est appelé (V2-V1) HF. L'amplificateur 13 peut être à gain ajustable pour équilibrer les deux voies. Le circuit commutateur-échantillonneur 14 est commandé à la cadence point par un signal d'horloge HP provenant du circuit 7. Il a pour fonction de déconnecter la première voie pendant la première moitié de chaque période point T et de brancher cette voie vers le sommateur 15 au cours de chaque deuxième moitié de période point c'est-à-dire de T/2 à T. La première voie étant déconnectée de 0 à T/2 ce circuit pourra comporter en sortie un condensateur de maintien 16 qui est remis à zéro au cours de chaque première moitié de période de 0 à T/2 par connexion à la masse (potentiel de référence nul) du commutateur 14.

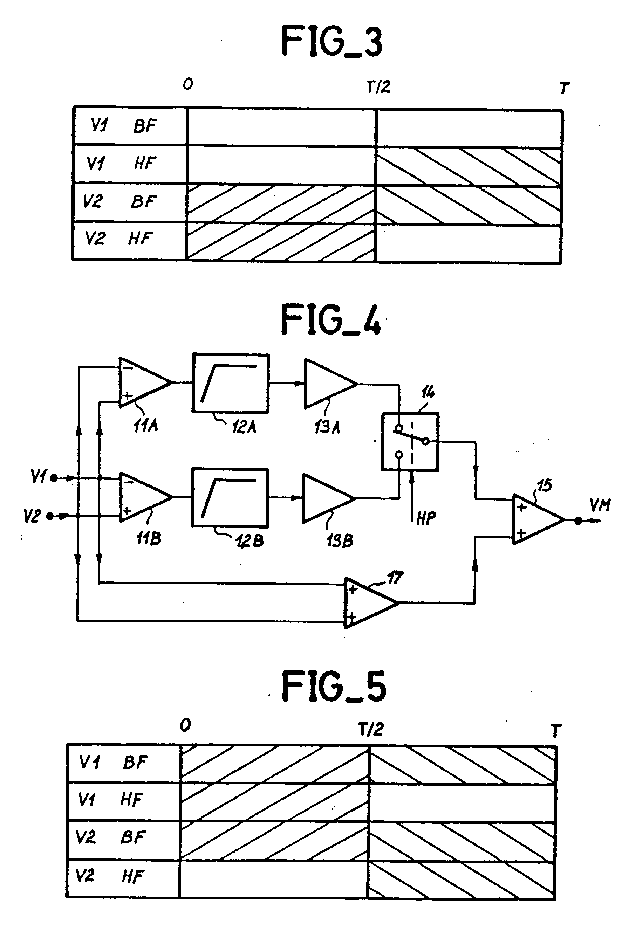

La deuxième voie comporte la connexion entre la deuxième entrée E2 et la deuxième entrée du sommateur 15 à laquelle elle transmet continuellement le signal vidéo V2. Ce signal vidéo V2 est transmis pleine bande c'est-à-dire aussi bien son spectre basse fréquence V2BF que son spectre haute fréquence V2HF en considérant les spectres BF et HF définis par le filtrage 12. Le tableau Fig.3 montre les signaux transmis par l'intermédiaire du sommateur 15 et constituant la vidéo mélangée VM. On se rend compte durant la première demi-période, 0 à T/2, que la sortie VM consiste en la somme (V2BF + V2HF) c'est-à-dire à la totalité du signal V2. Durant la deuxième période, T/2 à T, le signal VM est formé de la partie V2BF et de la partie V1HF issu de la première voie. Ce signal correspond sensiblement au signal V1 étant donné le décalage très faible entre les matrices égal à la moitié du pas des pixels dans le sens horizontal, compte tenu que l'image ne varie pratiquement pas en basse fréquence sur une telle étendue. Par contre, le signal basse fréquence étant le même durant chaque demi-période et issu du même capteur, le capteur 4 en l'occurence, ce signal n'est pas soumis aux différences d'homogénéité qui peuvent exister entre les capteurs 3 et 4 et les défauts et inconvénients résultant de cette absence d'homogénéité sont éliminés.

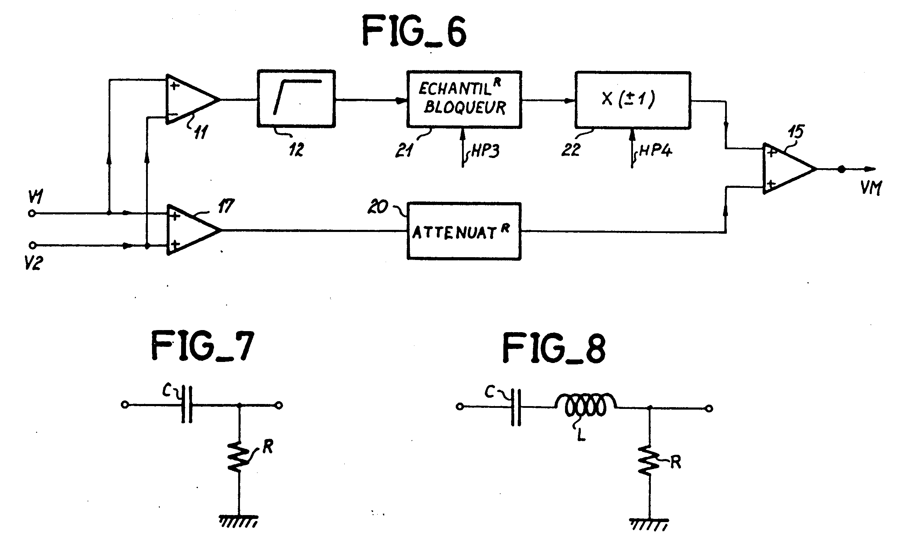

La figure 4 se rapporte à un autre mode de réalisation du mélangeur suivant lequel la première voie se subdivise en deux voies parallèles jusqu'au niveau du commutateur-échantillonneur 14. Chacune de ces voies comporte les mêmes éléments que précédemment en série, un circuit soustracteur respectivement 11A et 11B, un filtre haute fréquence respectivement 12A et 12B et un circuit d'équilibrage de gain 13A et 13B. Les soustracteurs 11A et 11B reçoivent les signaux V1 et V2 de manière à fournir pour l'une de ces voies la différence (V1-V2) et pour l'autre la différence (V2-V1). Le commutateur rapide 14 branche alternativement l'une ou l'autre des sorties de ces voies, par exemple du côté 13A de 0 à T/2 de chaque période point et du côté 13B de T/2 à T. Ainsi le sommateur 15 reçoit sur sa première entrée durant la première moitié de la période point le signal (V1-V2) HF et durant la deuxième moitié de cette période le signal (V2-V1) HF. La voie vidéo qui aboutit à la deuxième entrée du sommateur 15 comporte un circuit sommateur 17 alimenté également par les deux signaux V1 et V2 pour obtenir la somme (V1 + V2) sans restriction spectrale. En conséquence, la sortie du sommateur 15 comporte comme il est résumé dans le tableau de la figure 5, durant la première demi-période 0 à T/2 de chaque période point, l'ensemble des signaux V1 et V2 en basse fréquence et le signal V1 haute fréquence avec un coefficient de gain égal à 2 soit : (V1 + V2) BF + 2V1HF. Le signal VM comporte durant la deuxième moitié de chaque période point, de T/2 à T, la même composante basse fréquence et la partie haute fréquence relative à V2 soit (V1 + V2) BF + 2V2HF. On voit ici encore que le signal VM en basse fréquence est inchangé, il correspond cette fois à la somme des signaux V1 et V2 des deux capteurs au cours des deux demi-périodes de chaque période point. Il en résulte que les défauts de non-homogénéité des capteurs sont également éliminés. En outre, la partie haute fréquence est obtenue avec un gain égal à 2 par ce montage.

Les éléments 13 de la figure 1 et 13A, 13B de la figure 4 peuvent être constitués par des amplificateurs à gain réglable pour équilibrer les gains des différentes voies. De manière équivalente, on peut utiliser comment représenté sur le montage figure 6, un atténuateur 20 sur la voie du bas alimentant la deuxième entrée du sommateur 15 à la place d'un amplificateur 13 sur la voie (ou les voies) supérieure.

Le montage figure 6 est équivalent à celui de la figure 4 mais nécessite moins de circuits. Il comporte deux voies, la voie inférieure avec le sommateur 17 et un atténuateur 20 ; et les deux voies supérieures sont remplacées par une seule voie avec les éléments 11,12 déjà cités et le commutateur rapide 14 s'y trouve remplacé par un circuit échantillonneur-bloqueur 21 suivi d'un circuit multiplicateur 22. Le circuit 22 produit une multiplication par +1 ou -1, il est réglé pour multiplier par -1 au cours de chaque première moitié de période point, c'est-à-dire entre les instants nT et (n + 1/2)T et par le coefficient +1 durant chaque deuxième moitié de période point c'est-à-dire entre les instants (n + 1/2)T et (n + 1)T la valeur n étant égale à 0, ou un entier supérieur à 0. Les circuits 21 et 22 sont commandés par des signaux de synchronisation correspondants indiqués HP3 et HP4 et issus du générateur 7. Le circuit délivre comme précédemment, au cours de la première moitié de période point le signal (V1 + V2)BF + 2V1HF et au cours de la deuxième moitié de période (V1 + V2) BF + 2V2HF.

Le circuit filtre haute fréquence 12 peut être un filtre passehaut réalisé simplement avec une cellule RC du type représenté à la figure 7. Avec une cellule RLC du type représenté à la figure 8 la fonction assurée est un filtrage passe-bande limitant le filtrage supérieurement à une fréquence HF déterminée choisie en relation avec la fréquence de Nyquist présentée par le système. Cette fréquence limite peut se situer autour de 10MgHz avec des capteurs à transfert interligne présentant 500 points par ligne pour visualiser une image haute résolution à 625 lignes de 1000 points.

Les circuits mélangeurs décrits conformes à l'invention autorisent un multiplexage de signaux vidéo synchrones et peuvent également être utilisés pour réalisés des correcteurs de contour, le dosage s'obtenant à l'aide d'une commande de gain. Dans cette utilisation une voie vidéo initiale sera dédoublée en deux voies synchrones en utilisant un circuit électrique de retard permettant de décaler temporellement le signal d'une valeur correspondant à un demi pixel.

**Revendications**

1. Circuit mélangeur vidéo recevant un premier signal vidéo et un deuxième signal vidéo résultant de l'analyse de la même image par deux capteurs dont les points d'analyse sont décalés d'un demi-intervalle entre deux points consécutifs d'un même capteur, le mélangeur comportant un commutateur-échantillonneur pour former un signal composite à partir de ces signaux vidéo, caractérisé en ce qu'il comporte un circuit sommateur (15) dont les entrées sont couplées aux sorties de deux voies :
  - une première voie comportant, connectés en série, un circuit soustracteur (11) qui reçoit le premier (V1) et le deuxième signal vidéo (V2), un circuit filtre haute fréquence (12) pour éliminer le spectre basse fréquence compris entre 0 et une fréquence prédéterminée du signal de sortie du circuit soustracteur et transmettre la partie HF du spectre de ce signal, au dessus de cette fréquence prédéterminée, et le commutateur-échantillonneur (14) commandé séquentiellement pour connecter la première entrée du sommateur (15) à la sortie du circuit filtre durant une moitié de chaque période point et à un point de potentiel de référence de masse durant l'autre moitié, de la période point,

  - une deuxième voie transmettant l'un des signaux vidéo à la deuxième entrée dudit sommateur,

  en sorte que le signal mélangé (VM) délivré en sortie du sommateur est constitué spectralement de la partie HF correspondant à l'un desdits signaux vidéo au cours de chaque première demi-période point de balayage et de la partie HF de l'autre signal vidéo au cours de chaque deuxième demi-période et d'une partie BF inchangée pendant ces deux demi-périodes point.

2. Circuit mélangeur vidéo recevant un premier signal vidéo V$_1$ et un deuxième signal vidéo V$_2$ résultant de l'analyse de la même image par des capteurs dont les points d'analyse sont décalés d'un demi-intervalle entre deux points consécutifs d'un même capteur, le mélangeur comportant un commutateur-échantillonneur pour former un signal composite à partir de ces signaux vidéo V$_1$ et V$_2$, caractérisé en ce qu'il comporte un circuit sommateur (15) dont les entrées sont couplées aux sorties de deux voies :
  - une première voie subdivisée en deux sous-voies parallèles jusqu'à l'entrée du commutateur-échantillonneur (14), chacune de ces sous-voies parallèles comportant, connectés en série, un circuit soustracteur (11A, 11B) recevant chacun respectivement les premier et second signaux vidéo, suivi d'un circuit filtre haute fréquence (12A, 12B) pour éliminer la partie BF du spectre du signal vidéo reçu entre 0 et une fréquence prédéterminée, l'un desdits soustracteurs fournissant un signal V$_1$-V$_2$ et l'autre un signal V$_2$-V$_1$, ledit commutateur connectant alternativement la sortie de chacune de ces sous-voies parallèles à la première entrée du sommateur (15) pendant une demi-période de chaque période point,
  - une deuxième voie comportant également un circuit sommateur (17) alimenté par les deux signaux vidéo pour produire la somme (V1 + V2) correspondante,

  en sorte que le signal mélangé (VM) délivré en sortie du sommateur est constitué spectralement de la partie HF correspondant à l'un desdits signaux vidéo au cours de chaque première demi-période point de balayage et de la partie HF de l'autre signal vidéo au cours de chaque deuxième demi-période et d'une partie BF inchangée pendant ces deux demi-périodes point.

3. Circuit mélangeur selon l'une des revendications 1 et 2, caractérisé en ce qu'un circuit amplificateur (13, 13A, 13B) est interposé entre la sortie du, respectivement des, circuit filtre et ledit commutateur pour équilibrer le gain des voies.

4. Circuit mélangeur vidéo recevant un premier signal vidéo et un deuxième signal vidéo résultant de l'analyse de la même image par des capteurs dont les points d'analyse sont décalés d'un demi-intervalle entre deux points consécutifs d'un même capteur, le mélangeur comportant un commutateur-échantillonneur pour former un signal composite à partir de ces signaux vidéo, caractérisé en ce qu'il comporte un circuit sommateur (15) dont les entrées sont couplées aux sorties de deux voies :
   - une première voie comportant, connectés en série, un circuit soustracteur (11) qui reçoit le premier (V1) et le deuxième signal vidéo (V2), un circuit filtre haute fréquence (12) pour éliminer le spectre basse fréquence compris entre 0 et une fréquence prédéterminée du signal de sortie du circuit soustracteur et transmettre la partie HF du spectre de ce signal, au dessus de cette fréquence prédéterminée, et le commutateur-échantillonneur constitué par un circuit échantillonneur-bloqueur (21) en série avec un circuit multiplicateur (22), le circuit multiplicateur produisant une multiplication par +1 au cours d'une demi-période de chaque période point et par -1 au cours de la demi-période suivante
   - une deuxième voie comportant également un circuit sommateur (17) alimenté par les deux signaux pour produire la somme (V1 + V2) correspondante,
   en sorte que le signal mélangé (VM) délivré en sortie du sommateur est constitué spectralement de la partie HF correspondant à l'un desdits signaux vidéo au cours de chaque première demi-période point de balayage et de la partie HF de l'autre signal vidéo au cours de chaque deuxième demi-période et d'une partie BF inchangée pendant ces deux demi-périodes point.

5. Circuit mélangeur selon l'une quelconque des revendications précédentes, caractérisé en ce que le circuit filtre (12) est un filtre passe-haut du type cellule RC.

6. Circuit mélangeur selon l'une quelconque des revendications 1 à 5, caractérisé en ce que le circuit filtre (12) est du type passe-bande pour sélectionner un spectre HF limité et est constitué par une cellule RLC.

## Claims

1. A video mixing circuit receiving a first video signal and a second video signal resulting from the analysis of a given image by two sensors, whose analysis points are offset by a semi-interval between two consecutive points of a given sensor, the mixer comprising a switching and sampling device in order to form a composite signal on the basis of said video signals, characterized in that it comprises a summating circuit (15) whose inputs are coupled with the outputs of two paths, that is to say:
   - a first path comprising, connected in series, a subtracting circuit (11) which receive the first (VI) and the second (V2) video signal, a high frequency filter circuit (12) in order to eliminate the low frequency spectrum comprised between 0 and a predetermined frequency of the output signal of the subtracting circuit and to transmit the HF part of the spectrum of the said signal, above the said predetermined frequency, and the switching and sampling device (14) controlled sequentially in order to connect the first input of the summating device (15) with the output of the filter during half of each point period and at a ground reference potential point during the other half, of the point period.
   - a second path transmitting one of the video signals to the second input of the said summating device,
   in such a manner that the mixed signal (VM) supplied at the output of the summating device is spectrally constituted by the HF part corresponding to one of the said video signals in the course of each first point of sweep semi-period and of the HF part of the other video signal during the course of each second semi-period and of an LF part unaltered during these two point semi-periods.

2. A video mixing circuit receiving a first video signal V1 and a second video signal V2 resulting from the analysis of a given image by sensors, whose analysis points are offset by a semi-interval between two consecutive points of a given sensor, the mixer comprising a switching and sampling device in order to form a composite signal on the basis of said video signals (V1 and V2), characterized in that it comprises a summating circuit (15) whose inputs are coupled with the outputs of two paths, that is to say:

- a first path subdivided into two sub-paths parallel as far as the input of the switching and sampling device (14), each of said parallel sub-paths comprising, connected in series, a subtracting circuit (11A and 11B) each respectively receiving the first and the second video signals, followed by a high frequency filter circuit (12A and 12B) in order to eliminate the LF part of the spectrum of the video signal received between 0 and a predetermined frequency, one of the said subtracters supplying a signal V1 - V2 and the other supplying a signal V2 - V1, the said switching device alternatively connecting the output of the each of these parallel sub-paths with the first input of the summating device (15) during a semi-period of the each point period,

- a second path also comprising a summating device (17) supplied with the two video signals in order to produce the corresponding sum (V1 + V2),

in such a manner that the mixed signal (VM) supplied at the output of the summating device is spectrally constituted by the HF part corresponding to one of the said video signals in the course of each first sweep point semi-period and of the HF part of the other video signal in the course of each second semi-period and of one LF part unaltered during these two point semi-periods.

3. The mixing circuit as claimed in claim 1 or in claim 2, characterized in that an amplifying circuit (13, 13A and 13B) is interposed between the output of the filter circuit or, respectively, circuits and the said switching device in order to balance the gain of the paths.

4. A video mixing circuit receiving a first video signal and a second video signal resulting from the analysis of a given image by sensors, whose analysis points are offset by a semi-interval between two consecutive points of a given sensor, the mixer comprising a switching and sampling device in order to form a composite signal on the basis of said video signals, characterized in that it comprises a summating circuit (15) whose inputs are coupled with the outputs of two paths, that is to say:

- a first path comprising, connected in series, a subtracting circuit (11) which receives the first (V1) and the second (V2) video signal, a high frequency filter circuit (12) in order to eliminate the low spectrum comprised between 0 and a predetermined frequency of the output signal of the subtracting circuit and to transmit the HF part of the spectrum of the said signal, above the said predetermined frequency, and the switching and sampling device (14) constituted by a sample and hold circuit (21) in series with a multiplying circuit (22), the multiplying circuit performing multiplication by +1 during the course of a semi-period of each point period and by -1 during the course of the following semi-period,

- a second path also comprising a summating device (17) supplied with the two video signals in order to produce the corresponding sum (V1 + V2),

in such a manner that the mixed signal (VM) supplied at the output of the summating device is spectrally constituted by the HF part corresponding to one of the said video signals in the course of each first sweep point semi-period and of the HF part of the other video signal in the course of each second semi-period and of an LF part unaltered during these two point semi-periods.

5. The mixing circuit as claimed in any one of the preceding claims, characterized in that the filter circuit (12) is an RC cell type high pass filter.

6. The mixing circuit as claimed in any one of the preceding claims 1 through 5, characterized in that the filter circuit (12) is of the pass-band type in order to select a limited HF spectrum and it is constituted by an RLC cell.

**Patentansprüche**

1. Video-Mischerschaltung, die ein erstes Videosignal und ein zweites Videosignal empfängt, die sich aus der Analyse desselben Bildes mittels zweier Meßwertaufnehmer ergeben, wobei die Analysepunkte der zwei Meßwertaufnehmer um ein Halbintervall zwischen zwei aufeinanderfolgenden Punkten desselben Meßwertaufnehmers versetzt sind und wobei die Mischerschaltung eine Umschalt-/Abtast-Schaltung zum Bilden eines aus diesen Videosignalen zusammengesetzten Signals aufweist, dadurch gekennzeichnet, daß sie eine Additionsschaltung (15) aufweist, deren Eingänge mit den Ausgängen zweier Wege gekoppelt sind:

- einem ersten Weg, der in einer Reihenschaltung eine Subtraktionsschaltung (11), die das erste (V1) und das zweite (V2) Videosignal empfängt, eine Hochfrequenzfilterschaltung (12) zum Beseitigen des Nieder- frequenzspektrums, das zwischen 0 und einer vorgegebenen Frequenz des Ausgangssignals der Subtraktionsschaltung liegt, und zum Übertragen des HF-Anteils des Spektrums dieses Signals oberhalb dieser vorgegebenen Frequenz und die Umschalt- /Abtast-Schaltung (14), die sequentiell gesteuert wird, um den ersten Eingang der Additionsschaltung (15) während einer Hälfte einer jeden Punktperiode mit dem Ausgang der Filterschaltung und während der anderen Hälfte der Punktperiode mit einem Masse-Bezugspotentialpunkt zu verbinden, umfaßt,

- einen zweiten Weg, der eines der Videosignale an den zweiten Eingang der Additionsschaltung überträgt,
- derart, daß das am Ausgang der Additionsschaltung gelieferte Summensignal (VM) spektralmäßig vom HF-Anteil, der einem der zwei Videosignale während der ersten halben Abtastpunkt-Periode entspricht, und dem HF-Anteil des anderen Videosignals während jeder zweiten Halbperiode und einem NF- Anteil, der während dieser zwei halben Punktperioden unverändert bleibt, gebildet wird.

2.  Video-Mischerschaltung, die ein erstes Videosignal V1 und ein zweites Videosignal V2 empfängt, die sich aus der Analyse desselben Bildes mittels Meßwertaufnehmern ergeben, wobei die Analysepunkte der Meßwertaufnehmer um ein Halbintervall zwischen zwei aufeinanderfolgenden Punkten desselben Meßwertaufnehmers versetzt sind und wobei die Mischerschaltung eine Umschalt-/Abtast-Schaltung zum Bilden eines aus diesen zwei Videosignalen V1 und V2 zusammengesetzten Signals aufweist, dadurch gekennzeichnet, daß sie eine Additionsschaltung (15) aufweist, deren Eingänge mit den Ausgängen zweier Wege gekoppelt sind:

- einem ersten Weg, der bis zum Eingang der Umschalt-/Abtast-Schaltung (14) in zwei parallele Nebenwege unterteilt ist, wobei jeder dieser parallelen Nebenwege in einer Reihenschaltung eine Subtraktionsschaltung (11A, 11B), die jeweils das erste bzw. das zweite Videosignal empfangen, gefolgt von einer Hochfrequenzfilterschaltung (12A, 12B) zum Beseitigen des NF-Anteils des Spektrums des empfangenen Videosignals, das zwischen 0 und einer vorgegebenen Frequenz liegt, umfaßt, wobei eine der Subtraktionsschaltungen ein Signal V1 - V2 und die andere ein Signal V2 - V1 liefert, wobei die Umschalt-Schaltung während einer Halbperiode einer jeden Punktperiode abwechselnd den Ausgang eines jeden dieser parallelen Nebenwege mit dem ersten Eingang der Additionsschaltung (15) verbindet,

- einem zweiten Weg, der ebenfalls eine Additionsschaltung (17) aufweist, der die zwei Videosignale zugeführt werden, um die entsprechende Summe (V1 + V2) zu erzeugen,
- derart, daß das Summensignal (VM), das an den Ausgang der Additionsschaltung geliefert wird, spektralmäßig vom HF-Anteil, der einem der zwei Videosignale während einer jeden ersten halben Abtast-Punktperiode entspricht, und vom HF-Anteil des anderen Videosignals während einer jeden zweiten Halbperiode und von einem NF-Anteil, der während dieser zwei halben Punktperioden unverändert bleibt, gebildet wird.

3.  Mischerschaltung gemäß einem der Ansprüche 1 und 2, dadurch gekennzeichnet, daß zwischen dem Ausgang der Filterschaltung bzw. der Filterschaltungen und der Umschalt- Schaltung eine Verstärkerschaltung (13, 13A, 13B) eingesetzt ist, um die Verstärkung der Wege abzugleichen.

4.  Video-Mischerschaltung, die ein erstes Videosignal und ein zweites Videosignal empfängt, die sich aus der Analyse desselben Bildes mittels Meßwertaufnehmern ergeben, wobei die Analysepunkte dieser Meßwertaufnehmer um ein Halbintervall zwischen zwei aufeinanderfolgenden Punkten desselben Meßwertaufnehmers versetzt sind und wobei die Mischerschaltung eine Umschalt/Abtast-Schaltung zum Bilden eines aus diesen Videosignalen zusammengesetzten Signals aufweist, dadurch gekennzeichnet, daß sie eine Additionsschaltung (15) aufweist, deren Eingänge mit den Ausgängen zweier Wege gekoppelt sind:

- einem ersten Weg, der in einer Reihenschaltung eine Subtraktionsschaltung (11), die das erste (V1) und das zweite (V2) Videosignal empfängt, eine Hochfrequenzfilterschaltung (12) zum Beseitigen des Nieder- frequenzspektrums, das zwischen 0 und einer vorgegebenen Frequenz des Ausgangssignals der Subtraktionsschaltung liegt, und zum Übertragen des HF-Anteils des Spektrums dieses Signals oberhalb dieser vorgegebenen Frequenz, die Umschalt-/Abtast- Schaltung, die von einer Abtast-/Halte-Schaltung (21) und einer hiermit in Reihe geschalteten Multiplikationsschaltung (22) gebildet wird, umfaßt, wobei die Multiplikationsschaltung während einer Halbperiode einer jeden Punktperiode eine Multiplikation mit +1 und während der folgenden Halbperiode eine Multiplikation mit -1 ausführt,

- einem zweiten Weg, der ebenfalls eine Additionsschaltung (17) aufweist, der die zwei Signale zugeführt werden, um die entsprechende Summe (V1 + V2) zu erzeugen,

- derart, daß das Summensignal (VM), das an den Ausgang der Additionsschaltung geliefert wird, spektralmäßig vom HF-Anteil, der einem der Videosignale während jeder ersten halben Abtast-Punktperiode entspricht, und dem HF-Anteil des anderen Videosignals während jeder zweiten Halbperiode und von einem NF-Anteil, der während dieser zwei halben Punktperioden unverändert bleibt, gebildet wird.

5. Mischerschaltung gemäß einem der vorangehenden Ansprüche, dadurch gekennzeichnet, daß die Filterschaltung (12) ein Hochpaßfilter vom RC-Zellen-Typ ist.

6. Mischerschaltung gemäß einem der Ansprüche 1 bis 5, dadurch gekennzeichnet, daß die Filterschaltung (12) vom Bandpaßtyp ist, um ein begrenztes HF-Spektrum auszuwählen, und von einer RLC-Zelle gebildet wird.

FIG_1

FILTRE HAUTE FREQUENCE

LECTURE - SYNCHRO

MELANGEUR

FIG_2

# FIG_3

| | | 0 | T/2 | T |
|---|---|---|---|---|
| V1 | BF | | | |
| V1 | HF | | ///// | |
| V2 | BF | ///// | ///// | |
| V2 | HF | ///// | | |

# FIG_4

# FIG_5

| | | 0 | T/2 | T |
|---|---|---|---|---|
| V1 | BF | ///// | ///// | |
| V1 | HF | ///// | | |
| V2 | BF | ///// | ///// | |
| V2 | HF | | ///// | |

# FIG_6

- 11
- 12
- 21 — HP3
- 22 — HP4
- ECHANTIL$^R$ BLOQUEUR
- X (±1)
- 15
- 17
- 20 — ATTENUAT$^R$
- V1
- V2
- VM

# FIG_7

C — R

# FIG_8

C — L — R

EP 0 267 104 B1